Europäisches Patentamt

European Patent Office

Office européen des brevets

(11) Veröffentlichungsnummer: **0 212 199**
**B1**

(12) **EUROPÄISCHE PATENTSCHRIFT**

(45) Veröffentlichungstag der Patentschrift: **04.07.90**

(21) Anmeldenummer: **86109334.2**

(22) Anmeldetag: **08.07.86**

(51) Int. Cl.⁵: **H 04 N 1/00, H 04 N 1/42**

(54) **Faksimile-Empfänger mit einer Abtasteinrichtung zur Erzeugung von digitalen Bildsignalen.**

(30) Priorität: **27.07.85 DE 3526998**

(43) Veröffentlichungstag der Anmeldung:
**04.03.87 Patentblatt 87/10**

(45) Bekanntmachung des Hinweises auf die
Patenterteilung:
**04.07.90 Patentblatt 90/27**

(84) Benannte Vertragsstaaten:
**AT BE CH FR GB IT LI NL SE**

(56) Entgegenhaltungen:
**DE-A-2 934 559**
**FR-A-2 412 211**
**FR-A-2 450 011**
**GB-A-2 124 055**

(73) Patentinhaber: **LOEWE OPTA GMBH**
**Industriestrasse 11 Postfach 220**
**D-8640 Kronach (DE)**

(72) Erfinder: **Heine, Kurt**
**Perlachweg 6**
**D-8218 Unterwössen (DE)**

**Beschreibung**

Die Erfindung betrifft einen Faksimile-Sendeempfänger gemäß dem Oberbegriff des Patentanspruchs 1.

Eine Faksimile-Sendeempfänger der genannten Art ist aus der DE-C-30 26 018 bekannt. Der darin eingesetzte Microcomputer ersetzt - soweit möglich - die üblichen Bauelemente und Funktionseinheiten. so daß nur wenige Elemente, wie mechanische Bauteile für die Abtast- und Aufzeichnungseinrichtung sowie das Modem, erforderlich sind. Mit dem Microcomputer werden die Vorgänge nach einer angegebenen Prioritätenliste abgearbeitet, wobei Vorgänge mit der höchsten Priorität jeweils dann durchgeführt werden, wenn sie zur Verarbeitung anstehen.

Ein Faksimile-Sendeempfänger gleicher Bauart mit einem Microcomputer, jedoch nicht in der weitgefächerten Einsatzlogik genutzt, ist aus der DE-C-29 19 561 ebenfalls bekannt.

Aus der DE-A-33 26 069 ist eine Einrichtung zur Umsetzung von Farbfernsehbildern in Rastergrafiken mit begrenzter Rasterauflösung, mit begrenzter Anzahl von gleichzeitig benutzbaren Farbtönen bekannt, die einen Analogdigitalumsetzer, einen Bildpunktspeicher und ein Prozessorsystem aufweist. Das Prozessorsystem errechnet nach Festlegung der Rasterauflösung aus der zum jeweiligen Rasterpunkt gehörenden Fläche eines Originalfernsehbildes einen Farbtonmittelwert und ordnet nach Festlegung der benutzbaren Rastergrafikfarbtöne jedem der Farbtonmittelwerte den jeweiligen ähnlichsten Rastergrafikfarbton zu. Bei der Einrichtung der bekannten Art wird zur Erstellung von farbigen Rastergrafiken zur Wiedergabe auf Bildschirmgeräten mit begrenzter Rasterauflösung einer begrenzten Anzahl von gleichzeitig nutzbaren Farbtönen der bei Bildschirmtext eingesetzte CEPT-Standard mit freidefinierbaren Zeichen und freidefinierbaren Farbtönen eingesetzt. Der CEPT-Standard enthält u.a. 63 Mosaikgrafikzeichen, im Raster 2 x 3 Teilflächen je Zeilenstelle, 56 Schräggrafikzeichen, 94 freidefinierbare Zeichen (DRCS-Zeichen, die punktweise definierbar sind), unterschiedlich viele benutzbare Farbtöne (bis zu 4096), unterschiedliche Raster von 6 x 5 bis 12 x 12 Teilflächen je Zeichenstelle.

Die Vorlage wird durch eine Farbfernsehkamera mit vorgeschalteten Farbfiltern im beliebigen Maßstab verfaßt. Das Videosignal wird mittels eines Analog-Digital-Umsetzers digitalisiert und über das Prozessorsystem als punktzugeordnetes Bildsignal in einen Bildpunktspeicher geleitet und darin punktweise gespeichert (z.B. 3 x 4 Bit für jeden Punkt eines Farbbildes). In dieser Form kann das gespeicherte Bild auf einem Farbfernsehmonitor wiedergegeben werden. Die hohe Punktzahl des CEPT-Standards in horizontaler Richtung (12 Punkte Breite entsprechen etwa 11 bis 12 Megapunkte/sec.) stellt sehr hohe Anforderungen an die Farbfernsehkamera und den Farbfernsehmonitor. Um mit normalen Kameras und Monitoren auszukommen, arbeitet die bekannte Anordnung mit zweifacher Vergrößerung in horizontaler und vertikaler Richtung. Die Einrichtung kann daher mit der halben Bildpunktrate und mit normalen preisgünstigen Farbfernsehkameras und Farbfernsehmonitoren arbeiten.

Hier ist durch Verdopplung in horizontaler und vertikaler Auflösungsvorrichtung eine Möglichkeit geschaffen, mit einer halben Bildpunktrate auskommen zu können.

Ein Bildreproduktionsgerät, bei dem zur Anpassung an mehrere Eingabegeräte die Art der Bildverarbeitung veränderbar ist, ist aus der DE-A-34 09 771 bekannt. Dieses Gerät weist eine Farbfernsehkamera, einen Umsetzmatrixschaltkreis und einen Komplementärfarben-Umsetzer für die Erzeugung subtraktiver Primärfarben auf; für das Signal Y Gelb, M für Magenta und C für Cyan. Diese ermittelten Komplementärfarben können dann übertragen und einem Drucker zum Ausdrucken zugeleitet werden.

Aus der DE-A-29 15 359 ist es bekannt, das empfangene Fernsehbild in digitaler Form zu speichern und mit höherer Geschwindigkeit oder einer anderen Reihenfolge aus dem Speicher auszulesen, um durch Erhöhung der Bildwiedergabefrequenz - wie auch durch Verzicht auf den Zeilensprung - ein flimmerfreies Bild wiederzugebens.

Aus der DE-A-32 09 876 ist ferner ein Fernsehwiedergabe- Gerät mit in einem digitalen Bildspeicher enthaltenem Normwandler bekannt, bei dem das vom Sender eingegebene Bild und das zeilenfrequent empfangene Videosignal des Fernsehbildes abgetastet .werden. Die Abtastwerte werden in digitale Datensätze umgewandelt .und mit einer ersten Einschreibfrequenz in einen Bildspeicher eingespeichert und mit einer Auslesefrequenz, welche ein Vierfaches der Einschreibfrequenz darstellt, ausgelesen, analogisiert und mit höherer Bild- und Zeilenfrequenz auf dem Bildschirm dargestellt. Um den unterschiedlichen Anforderungen bei der Normumwandlung von Fernsehbild und Textseite zu genügen, sind hierfür Multiplexschaltungen vorgesehen, die einen Zugriff auf die Fernsehbild- und Textspeicher ermöglichen. Um eine ausreichende Auflösung sicherzustellen, sind für die einzelnen Signale gewisse Mindestbandbreiten eingehalten. Für das Leuchtdichtesignal 4,5 MHz, für das Farbdifferenzsignal R-Y, B-Y je 1,125 MHz, für das vom Textseitendecoder gelieferte Farbsignal RGB je 9 MHz, für das Austastsignal 4,5 MHz. Von 25 Vollbildern/sec. auf 75 Vollbilder/sec. gewandelt, weisen die gewandelten Signale je die dreifache Bandbreite gegenüber den ursprünglichen Signalen auf. Hierbei handelt es sich um ein völlig synchrones System, d.h. die Schreib- und Lesegeschwindigkeiten der einzelnen Sender richten sich nach der Darstellungsgeschwindigkeit, insbesondere nach der Wiedergabe von der Anzahl der Bilder pro Sekunde.

Aus der DE-A-32 37 790 ist ferner ein System zur digitalen Übertragung von Farbfernsehsignalen mit einem sendeseitigen Codierer, der analoge Videosignale gemäß einem vorgegebenen Standard analog-digital wandelt, und einem empfangsseitigen Decodierer bekannt, der die empfangenen digitalen Signale wieder digital-analog wandelt, bei dem abhängig von einer gewünschten Betriebsart das Farbvideosignal oder die Farbwertsignale RGB oder die Komponentensignale R, B-Y, R-Y codiert werden, wobei die übertragenen Farbwertsignale in Komponentensignale umgesetzt werden und abhängig von der gewünschten Betriebsart nur ein Farbvideosignal oder ein Komponentensignal übertragen wird. Bei diesem System wird das Bildfernsehsignal in Form seiner Komponenten Y, B-Y, R-Y mit einer Gesamtbitrate von 216 MBit/s gemäß einer geltenden Studiennorm getrennt codiert und diese Bitrate wird auf die für die Übertragungsstrecke bearbeitbare Bitrate von 140 MBit/s herabgesetzt.

Aus der DE-A-33 25 143 ist ein Faksimile-Übertragungs-Gerät bekannt, mit welchem codierte Bilddaten gesendet und empfangen werden können. Dieses Gerät weist eine Systemsteuerschicht mit zwei Prozessoren auf, von welchen der eine die Leseoperation steuert, solange das Gerät auf Sendebetrieb ist, und die Aufzeichnungsoperation steuert, solange das Gerät auf Empfangsbetrieb ist, und der andere die Codieroperation steuert, solange das Gerät auf Sendebetrieb ist, und die Decodieroperation steuert, solange das Gerät auf Empfangsbetrieb ist. Mit Hilfe eines derartigen Paares von Microprozessoren können eine Parallelverarbeitung von Lese- und Codieroperationen sowie Decodierungs- und Aufzeichnungsoperationen durchgeführt werden, wodurch die Betriebsgeschwindigkeit ganz beträchtlich erhöht werden kann. Zur Übertragung der Daten ist ein Modem vorgesehen, das mit einer bestimmten Ein- und Ausgabegeschwindigkeit arbeitet. Auf der Empfangsseite ist ein Modem vorgesehen, das mit der gleichen Empfangs- und Sendegeschwindigkeit arbeitet.

Aus der DE-C-32 29 777 ist ferner eine Schaltungsanordnung zur Anpassung zweier Bildverarbeitungssysteme unterschiedlicher Auflösung bekannt, bei der binäre serielle Bildsignale in der Weise angepaßt werden, daß nur ein minimaler Informationsverlust auftritt. Die Bildsignale bei der Auflösung werden in die gleiche Anzahl von Blöcken unterteilt. Die n Bits eines Blockes des eingangsseitigen Bildsignals durchlaufen einen Parallelwandler und adressieren in einem Speicher ein Datenwort mit m Bits. Diese m Bits durchlaufen einen Parallelserienwandler, wodurch das ausgangsseitige Bildsignal entsteht. Durch die freie Wahl von n und m können verschiedene Auflösungen einander angepaßt werden.

Diese Lösung beschränkt sich auf die Horizontalauflösung, so besitzt z.B. ein Fernkopierer der Gruppe 3 eine Auflösung von 1728 Bits/Zeile, ein Fernkopierer der Gruppe 2 eine Auflösung von 1400/Zeile. Die Anpassung der n und m Bits muß in den Geräten implementiert sein.

Die Abtastvorrichtung bei dem beschriebenen bekannten Bildübertragungssystem kann mechanischer Art aber auch elektronischer Art unter Verwendung einer CCD-Kamera sein. Ebenso können hochauflösende Kameras verwendet werden. Der internationale CEPT-Standard, hier insbesondere der Fotografik-Mode, legt einzelne Codierungen für die punktweise ermittelten Bilddaten fest, wobei von definierten Farbdifferenzwerten ausgegangen wird. Die Beschreibung ist wiedergegeben im Part 3 zum CEPT-Standard "Define Photographic".

Ausgehend von diesem bekannten Stand der Technik liegt der Erfindung die Aufgabe zugrunde, einen Faksimile-Sendeempfänger unter Anwendung einer CCD-Kamera als Abtasteinrichtung für die Erzeugung der digitalen Bildsignale so auszubilden, daß unter Anwendung der nach dem CEPT-Standard definierten Codierungen der Bildsignale ein völlig asynchroner Betrieb zwischen Empfangs- und Sendestation ermöglicht wird, wobei gleichzeitig eine von der Aufnahmeseite abweichende Vertikalauflösung auf der Wiedergabeseite erzielbar sein soll.

Die Aufgabe wird erfindungsgemäß nach der im Patentanspruch 1 wiedergegebenen technischen Lehre gelöst.

Vorteilhafte Weiterbildungen der Erfindung sind in den Unteransprüchen beschrieben.

Eine Abtasteinrichtung, wie sie im erfindungsgemäßen Faksimile-Sendeempfänger vorgesehen ist, kann entweder mechanischer Bauart, wie ein Telefaxgerät, sein, wobei die Druckvorlage elektrostatisch oder optoelektrisch zeilenweise abgetastet und jeweils um eine Zeile nach der Abtastung vorgeschoben wird, oder elektronischer Bauart sein. Bei der zweiten Bauart wird die Bildvorlage mittels einer Videokamera abgetastet; hierzu bieten sich insbesondere CCD-Kameras an. Am Ausgang der Kamera können die RGB-Signale oder auch das Luminanzsignal und die Farbdifferenzsignale R-Y und B-Y abgegriffen werden. Letzteres hat den Vorteil, daß für die Darstellung der übertragenen Bildsignale auf einem Bildschirm wie beim Fernsehsystem die Komponente G-Y durch Matrizierung errechnet werden kann und weniger Informationen übertragen werden müssen.

Die Erfindung sieht nun vor, daß die Luminanz- und Farbdifferenzsignale und ggf. auch die RGB-Signale unter Berücksichtigung des Luminanzsignals punktbezogen ermittelt und digitalisiert werden. Das so digitalisierte Signal kann auf einfache Weise in einem Vollbildspeicher pixelorientiert abgelegt werden, zu welchem Zweck praktisch drei Speicherplätze pro Pixel mit der der entsprechenden Digitalzahl zugeordneten Größe abgelegt werden.

Die CPU des Faksimile-Sendeempfängers gibt die jeweilige Adresse an den Vollbildspeicher aus und legt fest, in welchem Speicherbereich die dem Punkt zugeordneten Daten einer zeilenmäßig abgetasteten Vorlage gespeichert werden sollen.

Da die abzutastenden Vorlagen unterschiedliche Auflösungen aufweisen, können sie auch mit unterschiedlichen Auflösungsgraden abgetastet werden. Es ist deshalb vorgesehen, daß bei gleichbleibender horizontaler Abtastfrequenz und damit gleichbleibender horizontaler Punktauflösung die Vertikalfrequenz veränderbar ist. Bezogen auf die Fernsehnorm nach CCIR, würde diese bei einer Verringerung der Vertikalfrequenz von 50 Hz auf 25 Hz, bei einer Horizontalabtastfrequenz von 15,625 kHz zu einer Verdopplung der Zeilenzahl und damit einer Verdopplung der Zeilenstruktur in vertikaler Richtung nach folgender Formel führen:

$$z = \frac{f_H}{f_V}$$

z=Zeilenzahl
$f_H$=Horizontalabtastfrequenz
$f_V$=Vertikalabtastfrequenz

Unter Anwendung anderer normierter Horizontalabtastfrequenzen können sich dabei andere Werte ergeben. Wichtig ist jedoch, daß das Teilungsverhältnis immer zur Abtastung einer vollen Zeilenzahl führt.

Die Erfindung sieht zur Erhöhung der Zeilenzahl eine sehr einfache Methode vor, die allerdings nur in Verbindung mit der Standbildabtastung realisierbar ist. Synchron mit dieser Abtastgeschwindigkeit muß aber auch eine Digitalisierung und damit eine Einspeicherung der Bildsignale in den Vollbildspeicher erfolgen, zu welchem Zweck die CPU den Digitalisierer in Abhängigkeit von der Punktadresse steuert und die Adresse für den Speicher ermittelt.

Die so vorbereiteten digitalisierten Werte können dann nach bekannten Codierungsverfahren codiert werden. Ein solches ist z.B. durch die 8 Bit-Festlegung des Luminanzsignals und der Farbdifferenzsignale im CEPT-Papier "Part 3 Define Photographic" festgelegt. Die ermittelten digitalisierten Bildsignale werden somit punktorientiert vom Coder entsprechend der jeweiligen Norm umcodiert und mit den Codierungen für die Steuerung und Übertragung je Zeile versehen, einem Modem zugeführt, das die Schnittstelle zum öffentlichen Fernsprechnetz oder zu einem anderen Datenübertragungsnetz, z.B. ISDN, bildet. Die Umcodierung braucht dabei nicht in der Geschwindigkeit zu erfolgen wie die Einspeicherung der digitalen Bildsignale in den Vollbildspeicher. Die CPU nimmt die Ablaufsteuerung vor, wobei eine Neueingabe einer mittels der CCD-Kamera abgetasteten Bildvorlage erst dann erfolgen kann, wenn die entsprechenden Speicherplätze im Vollbildspeicher ausgelesen und gelöscht sind. Die Steuerungsabläufe werden von der CPU nach eingeschriebenem Programm durchgeführt. Das Modem überträgt die Signale mit einer bestimmten Übertragungsgeschwindigkeit und liest diese entweder aus einem Zwischenspeicher aus bzw. weist der Codierer eine solche Umcodierungsgeschwindigkeit auf, die der Übertragungsgeschwindigkeit angepaßt ist, so daß der Datentransfer zu einer Empfangsstelle ungehindert durchgeführt werden kann.

In der Empfangsstelle werden die Daten über ein Modem, das den Netzabschluß des Empfangsteils bildet, einem Decoder zugeführt, der von der CPU gesteuert ohne Zwischenschaltung eines Pufferspeichers die Daten mit der Sendegeschwindigkeit (der Übertragungsgeschwindigkeit) decodiert. Bei Zwischenschaltung eines Pufferspeichers kann diese Decodierungszeit der Daten von der Übertragungsgeschwindigkeit abweichen.

Die decodierten bzw. umcodierten Digitalsignale, die in einem solchen Code umcodiert werden, der durch D/A-Wandlung für die Darstellung geeignet ist, werden in einem Vollbildspeicher - wiederum punktweise adressiert - zeilenweise abgelegt. Der Vorgang wiederholt sich, bis der gesamte Inhalt der Vorlage aus dem Vollbildspeicher des Senders ausgelesen und in den Vollbildspeicher des Empfängers übertragen ist. Die Daten können paralel hierzu oder später mit einer bestimmten Horizontal- und Vertikalablenkfrequenz aus dem Vollbildspeicher ausgelesen und nach der Dematrizierung und/oder bei RGBdigitalisierten Angaben durch entsprechende D/A-Wandler den Videoendverstärkern des Monitors zugeführt werden. Die Daten können aber auch einer Druckersteuerung zugeführt werden, die durch subtraktive Farbmischung das Bild wiedergibt. Für die Übertragung farbbildlicher Informationen müssen jeweils für die Farbdifferenzsignale oder das Luminanzsignal und die drei Grundfarben bei RGB-Abtastung die Speicherbereiche belegt und ausgelesen werden.

Durch die Erfindung ist es möglich, die Vorlage mit einer Auflösung aufzunehmen, die von der Wiedergabe-Auflösungs-Möglichkeit oder der gewünschten Auflösung abweicht. So kann z.B. durch die entsprechende Programmierung der CPU jede zweite Zeileninformation fallengelassen werden, z.B. wenn eine hochauflösende Darstellung mittels des Bildschirms des angeschlossenen Monitorgerätes nicht möglich erscheint.

Andererseits kann aber auch die Vollbildinformation durch Erhöhung der Horizontalauslesefrequenz mehrfach geschrieben werden, so daß eine höhere Auflösung als die eingespeicherte auf der Wiedergabeseite subjektiv erzielbar ist, um eine Verfeinerung der Zeilenstruktur zu erreichen.

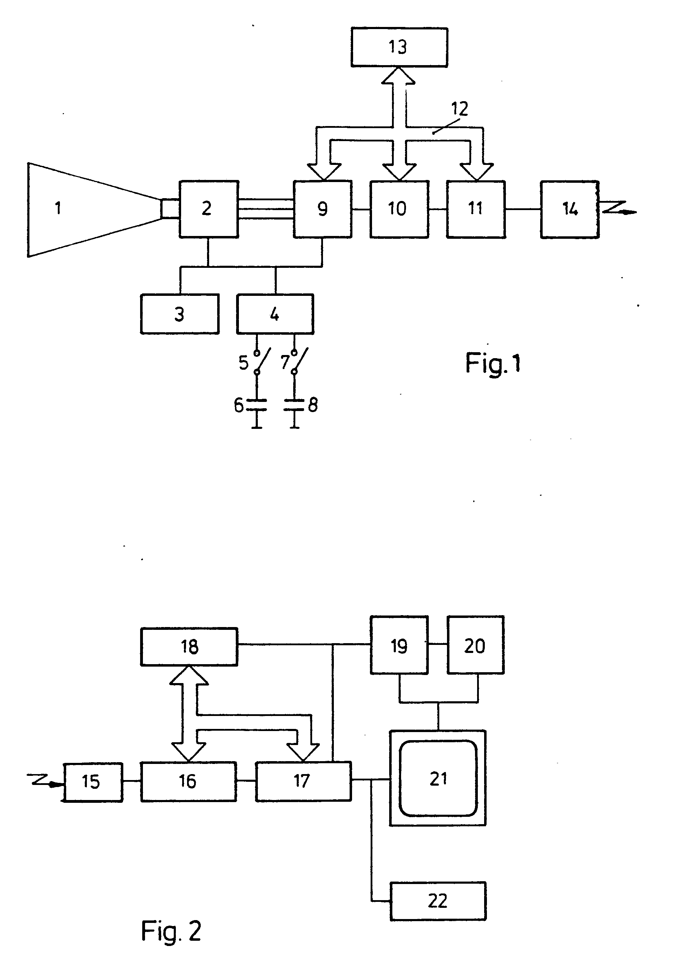

Die Erfindung wird nachfolgend anhand der in den Fig. 1 und 2 dargestellten Ausführungsbeispiele ergänzend erläutert.

In Fig. 1 ist ein Faksimile-Sendeempfänger dargestellt, welcher eine Vorlage 1 mittels der CCD-Kamera 2 abtastet. Die Horizontalabtastfrequenz ist dabei normiert und soll z.B. 15,625 kHz betragen. Die Abtastfrequenz wird von einem Horizontaloszillator 3 geliefert. Die Vertikalabtastfrequenz erzeugt ein Vertikaloszillator 4, der auf verschiedene Vertikalfrequenzen umschaltbar ist. So sind z.B. über einen Schalter 5 ein Ladekondensator 6 und über den Schalter 7 ein weiterer anders dimensionierter Kondensator 8 anschaltbar. Die Ladezeitkonstante der beiden Kondensatoren bestimmt dabei die jeweilige Frequenz. Die Synchronimpulse steuern die Abtastschaltungen der CCD-Kamera 2, an deren Ausgang das Luminanzsignal sowie die Farbdifferenzsignale R-Y und B-Y abgreifbar sind. Synchron mit der Abtastung erfolgt eine Digitalisierung der Luminanz- und Farbdifferenzsignale in einem Digitalisierer 9 bekannter Art, wie er z.B. aus dem vorgenannten Stand der Technik hervorgeht. Der Digitalisierer und der nachgeschaltete Vollbildspeicher 10 sowie der CEPT-Codierer 11 werden über einen Bus 12 von der CPU 13 busgesteuert. Die Adressier- und Einschreibgeschwindigkeit in dem Vollbildspeicher richtet sich dabei nach der Abtastgeschwindigkeit der Vorlage durch die CCD-Kamera. Die in den Speichern punktweise innerhalb der Zeilen adressiert abgelegten Daten werden synchron oder mit einer anderen Abtastgeschwindigkeit ausgelesen und einem CEPT-Codierer 11 zugeführt, der die Daten, sofern noch nicht umgesetzt, in einen Code umsetzt, der dem CEPT-Standard entspricht. Dieser Digitalisierer kann auch mit einer Mosaik- und Graphik-Erkennungsschaltung versehen sein, die anhand der eingegebenen Digitalinformationen zeichenplatzorientiert, z.B. im Punktraster 10 auf 12, feststellt, um welche Graphik-oder Mosaikelemente es sich bei der Darstellungsform handelt. Durch Vergleich mit entsprechenden eingeschriebenen Zeichen in einem ROM können dem Zeichenplatz zugeordnete Digitalinformationen, die das Darstellungselement beinhalten, ermittelt und übertragen werden. Parallel dazu sind dann die entsprechenden Farbelemente als Attribute entsprechend der CEPT-Codierung zu ermitteln, umzusetzen und im CEPT-Codierer codiert, ergänzt um die Verarbeitungscodes, zu übertragen. Ein nachgeschaltetes Modem 14 sorgt dafür, daß die so gewonnenen codierten Signale über ein öffentliches oder ein anderes Datennetz übertragen werden können.

Für den Duplexbetrieb, wie in Fig. 2 dargestellt, ist z.B. in einem Gerät ein weiteres Modem 15 integriert, das die von einem anderen Gerät ausgesandten Daten empfängt und einem CEPT-Decoder 11 zuführt. Der CEPT-Decoder, wie er z.B. aus der DE-PS 32 23 489 bekannt ist, setzt, unterstützt von der CPU, busgesteuert die ankommenden Daten in pixelorientierte Bildsignale um, die dann in einem Vollbildspeicher 17 abspeicherbar sind. Die Verarbeitungsgeschwindigkeit richtet sich dabei nach der Übertragungsgeschwindigkeit. Sofern ein Pufferspeicher zwischengeschaltet ist, kann die Verarbeitungsgeschwindigkeit eine geringere sein als die Übertragungsgeschwindigkeit. Die CPU 18 steuert über den Bus 23 darüber hinaus auch die Horizontal- und Vertikal-Oszillatoren 19 und 20 eines Moniators 21, falls ein solcher mit im Gerät integriert ist. Synchron der Horizontal- und Vertikalfrequenz werden die einzelnen punktorientiert abgelegten Bildsignale aus dem Vollbildspeicher ausgelesen und, da sie bereits die Darstellungs-Informationen beinhalten, matriziert bei gespeicherten Luminanz- und Farbdifferenzsignalen oder als abgelegte RGB-Signale unter Berücksichtigung des Luminanzsignals nach D/A-Wandlung, den Videoendstufen der Anzeigeröhre zugeführt. Die Auslesegeschwindigkeit kann dabei von der Übertragungsgeschwindigkeit und der Speichergeschwindigkeit in dem Vollbildspeicher 10 abweichen. Auch ist es möglich, über die CPU 18 Teilinformationen wegfallen zu lassen, wenn z.B. von einem hochauflösenden Informationsbild zwecks Darstellung nicht alle Zeilen dargestellt werden sollen, um z.B. eine schnellere Anzeige zu ermöglichen. Die Daten können aber auch in digitalisierter Form von der CPU 18 aus dem Vollbildspeicher ausgelesen und einem Drucker 22 zugeführt werden, der ein Ausdrucken der Daten als Farbbild ermöglicht.

**Patentansprüche**

1. Faksimile-Sendeempfängermit einer Abtastvorrichtung zur Erzeugung von digitalen Bildsignalen, die punktweise einer zu übertragenden Vorlage entsprechen, wobei die Vorlage zeilenweise mit einer bestimmten Horizontal- und Vertikalfrequenz abgetastet wird,
mit einem Speicher zum Speichern der digitalen Bildsignale,
mit einem Coder zur Codierung der digitalen Bildsignale,
mit einem Modem für die Datenübertragung und den Datenempfang,
mit einer Decodierschaltung, einem Speicher und einer Darstellungs- oder Aufzeichnungseinrichtung für empfangene Bildsignale,
mit einem Microcomputer für die Steuerung des Betriebes und mit Schnittstellen zwischen dem Microcomputer einerseits und der Abtasteinrichtung, dem Modem und dem Speicher, sowie dem Darstellungsdisplay bzw. der Aufzeichnungseinrichtung andererseits,
dadurch gekennzeichnet, daß zur Erhöhung der vertikalen Bildauflösung bei konstanter Horizontalabtastfrequenz die vertikale Abtastfrequenz ausgehend von einem Abtast-Normal stufenweise verringerbar ist, derart, daß die Zeilenzahl und der Vertikalabtastzyklus ganzzahlig sind,
daß die punktbezogenen digitalen Bildsignale, vom Microcomputer gesteuert, in einen Vollbildspeicher zeilenweise mit der Horizontalabtastfrequenz eingelesen und zwischengespeichert werden,
daß die Bildsignale mit einer anderen, der Signalübertragungsgeschwindigkeit entsprechenden, Frequenz punktweise adressiert ausgelesen und mit einer Zeileninformation versehen, codiert mittels eines nachgeschalteten Modems übertragen werden,
daß die über ein Modem empfangenen Signale mit der Sendegeschwindigkeit decodiert und in einen Vollbildspeicher bildpunktorientiert zeilenweise eingelesen und gespeichert werden, und
daß die Bildsignale, vom Microcomputer gesteuert, aus dem Vollbildspeicher mit einer Horizontalfrequenz ausgelesen werden, die von der Abtastfrequenz abweichen kann, und daß die digitalen Signale einer Display-Ansteuerung oder einer Druckersteuerung zugeführt werden.

2. Faksimile-Sendeempfanger nach Anspruch 1, dadurch gekennzeichnet, daß in der Abtasteinrichtung ein Zeilenzähler vorgesehen ist, der die abgetasteten Zeilen einer Vorlage zählt,

daß der Microcomputer die Zeilenanzahl als eine der Vorlage zugeordnete Formatangabe im Vollbildspeicher mitablegt und daß die Zeilenformatangabe und die digitalen Bildsignale in einem Coder codiert und über das Modem übertragen werden, und

daß auf der Empfängerseite die Signale decodiert und anhand der Formatvorgabe die Zeilen in einen Vollbildspeicher adressiert eingelesen und von einem Microcomputer ausgelesen und über D/A-Wandler und/oder Matrixschaltungen zur Darstellung auf einem Bildschirm oder an einen Pufferspeicher eines Druckwerks digital ausgegeben werden, und

daß bei verringerter Auflösung bei der Darstellungsebene gerad- oder ungeradzahlige Zeilen ausgelesen und dargestellt werden.

3. Faksimile-Sendempfänger nach Anspruch 1 oder 2, dadurch gekennzeichnet, daß die Vertikalfrequenz um ein Vielfaches gegenüber der Normalfrequenz verringert wird.

4. Faksimile-Sendempfänger nach einem der Ansprüche 1 bis 3 für den Duplexbetrieb, dadurch gekennzeichnet, daß zwei Vollbildspeicher, zwei Modems, ein Coder und ein Decoder vorgesehen sind.

5. Faksimile-Sendempfänger nach einem der vorhergehenden Ansprüche, dadurch gekennzeichnet, daß die im Vollbildspeicher der Abtasteinrichtung abgespeicherten Bilddaten in einem Coder in codierte Signale nach dem CEPT-Standard umgesetzt und über das Modem ausgesandt werden.

6. Faksimile-Sendempfänger nach Anspruch 5, dadurch gekennzeichnet, daß die digitalen Bildsignale im Vollbildspeicher zeichenplatzmäßig entsprechend der Matrix nach CEPT-Standard (10 x 12 Punkte) analysiert und bei Übereinstimmung des Zeicheninhaltes mit Mosaikelementen in einem ROM vom Microprozessor als zugeordnete, codierte Informationen ausgegeben werden, die in einem CEPT-Decoder auf der Empfängerseite wiederum in entsprechende punktorientierte Daten umgesetzt werden, welche Bildsignale in den Vollbildspeicher im Wiedergabebereich eingespeichert werden.

7. Faksimile-Sendempfänger nach einem der vorhergehenden Ansprüche, dadurch gekennzeichnet, daß der Speicherinhalt des Vollbildspeichers von einem Microcomputer im Hinblick auf Grafikelemente, deren Ablaufprogramme in einem ROM des Microcomputers untergebracht sind, abgetastet wird, und dieser bei gegebener Äquivalenz die Grafikelemente durch CEPT-Codierung codiert, ausgibt und überträgt, welche empfangenen Daten in einem CEPT-Decoder decodiert und punktweise im Vollbildspeicher der Empfängerseite abgelegt und auf einem Display zur Anzeige gebracht werden.

8. Faksimile-Sendempfänger nach einem der vorhergehenden Ansprüche in Verbindung mit der Abbildung farbbildlicher Vorlagen, dadurch gekennzeichnet, daß die Vorlage mittels einer Farbbildkamera (CCD) punktweise abgetastet und die zugeordneten Luminanz- (Y) und Farbdifferenzwerte (R-Y), (B-Y) in den Vollbildspeicher der Abtastrichtung digitalisiert eingespeichert werden, und daß nach dem Fotografikverfahren des CEPT-Standards die digitalen Werte in einem Coder codiert und über ein Modem übertragen werden.

9. Faksimile-Sendempfänger nach einem der vorhergehenden Ansprüche, dadurch gekennzeichnet, daß die RGB-Farbanteile einer mit einer Videokamera aufgenommenen, abgetasteten farbbildlichen Vorlage für jeden Punkt einzeln ermittelt und im Vollbildspeicher abgelegt werden, und daß sie nach dem CEPT-Standard codiert und über das Modem übertragen und nach der Decodierung in einen Vollbildspeicher als punktbezogene Darstellungsinformation RGB eingelesen werden und daß die decodierten RGB-Signale ausgelesen und auf einem Farbdisplay angezeigt werden.

10. Faksimile-Sendempfänger nach einem der vorhergehenden Ansprüche, dadurch gekennzeichnet, daß der Coder auf verschiedene Codierungsgeschwindigkeiten umschaltbar ist und daß jeder der Codierungsgeschwindigkeiten eine digitale Information zugeordnet ist, die zu Beginn der Übertragung über das Modem an die Empfängerschaltung abgegeben wird, um die Daten ungepuffert oder gepuffert dem Decoder mit einer der Sendegeschwindigkeit angepaßten Geschwindigkeit zur Decodierung zuzuleiten, der die über das Modem ankommenden Daten decodiert und mit der Umsetzgeschwindigkeit oder bei Zwischenschaltung eines Pufferspeichers mit einer anderen Geschwindigkeit decodiert und die Bildsignale punktweise adressiert in den Vollbildspeicher speichert, der im asynchronen Betrieb mit der Abtastung, der Übertragung und Decodierung auslesbar ist.

**Revendications**

1. Emetteur-récepteur de fac-similé comprenant un dispositif d'exploration destiné à produire les signaux images numériques qui correspondent point par point à un original à transmettre, l'original étant exploré ligne par ligne avec une fréquence horizontale et une fréquence verticale déterminées, ledit dispositif d'exploration comprenant une mémoire (10) pour mémoriser les signaux images numériques, un codeur (11) pour coder les signaux images numériques, un modem (14) pour la transmission des données et la réception des données, un circuit décodeur, une mémoire et un dispositif de représentation ou d'enregistrement pour les signaux images reçus, un micro-ordinateur pour la commande du fonctionnement et des interfaces interposées entre le micro-ordinateur, d'une part, et le dispositif d'exploration, le modem et la mémoire, ainsi que l'affichage de la représentation ou le dispositif d'enregistrement, d'autre part, caractérisé en ce que pour améliorer la résolution verticale de l'image en conservant une fréquence constante d'exploration horizontale, la fréquence d'exploration verticale peut être réduite par étapes en partant d'une normale d'exploration, de telle manière que le nombre des lignes et le nombre des cycles d'exploration verticale soient des nombres entiers, en ce que les signaux image numériques point par point sont lus par lignes et mémorisés en mémorisation intermédiaire dans une mémoire d'image complète, avec la fréquence d'exploration horizontale, sous la commande du micro-ordinateur, en ce que les signaux image sont lus, adressés par points, avec une autre fréquence, qui correspond à la vitesse de transmission des signaux, munie d'une information de ligne, et transmis sous forme codée à l'aide d'un modem placé en aval, en ce que les signaux reçus par l'intermédiaire d'un modem sont décodés à la vitesse d'émission et lus ligne par ligne, orientés par points de l'image et mémorisés dans une mémoire d'image complète, en ce que, sous la commande du micro-ordinateur, les signaux image sont lus dans la mémoire d,image complète avec une fréquence horizontale qui peut être différente de la fréquence d'exploration et en ce que les signaux numériques sont acheminés à une commande d'affichage ou à une commande d'impression.

2. Emetteur-récepteur de fac-similé selon la revendication 1, caractérisé en ce que dans le dispositif d'exploration est prévu un compteur de lignes qui compte les lignes explorées d'un original, en ce que le microordinateur introduit le nombre de lignes dans la mémoire d'image complète sous la forme d'une indication de format associée à l'original, et en ce que l'indication de format de lignes et les signaux images numériques sont codés dans un codeur et transmis par l'intermédiaire du modem, en ce que, sur le côté récepteur, les signaux sont décodés et que, grâce à l'indication de format, les lignes sont introduites sous forme adressée dans une mémoire d'images complètes et lues par un micro-ordinateur et émises sous forme numérique, par l'intermédiaire de convertisseurs numériques/analogiques et/ou de circuits matriciels pour la représentation sur un écran ou transmis à une mémoire tampon appartenant à une imprimante, et en ce que, dans le cas d'une résolution réduite au niveau de la représentation, les lignes paires ou impaires sont lues et représentées.

3. Emetteur-récepteur de fac-similé selon l'une des revendications 1 ou 2, caractérisé en ce que la fréquence verticale est réduite de deux ou plus de deux fois par rapport à la fréquence normale.

4. Emetteur-récepteur de fac-similé selon l'une des revendications 1 à 3, pour le travail en duplex, caractérisé en ce qu'il y est prévu deux mémoires d'image complète, deux modems, un codeur et un décodeur.

5. Emetteur-récepteur de fac-similé selon l'une des revendications précédentes, caractérisé en ce que les données image mémorisées dans la mémoire d'image complète du dispositif d'exploration sont converties dans un codeur en signaux codés selon le standard CEPT et émis par l'intermédiaire du modem.

6. Emetteur-récepteur de fac-similé selon la revendication 5, caractérisé en ce que les signaux image numériques sont analysés dans la mémoire d'image complète par emplacements de signes, conformément à la matrice selon le standard CEPT (10x12 points) et, lorsque le contenu de signes concorde avec les éléments de mosaïque contenus dans une mémoire morte (ROM), ces signaux sont émis par le micro-ordinateur sous la forme d'informations codées correspondantes qui, dans un décodeur CEPT sur le côté récepteur, sont à nouveau converties en données correspondantes orientées par points, lesquels signaux image sont mémorisés dans la mémoire d'image complète dans la région de reproduction.

7. Emetteur-récepteur de fac-similé selon l'une des revendications précédentes, caractérisé en ce que l'unité de mémoire de la mémoire d'image complète est explorée par un micro-ordinateur pour des éléments graphiques dont les programmes de déroulement sont contenus dans une mémoire morte (ROM) du micro-ordinateur et ce dernier en présence d'une équivalence donnée, émet et transmet les éléments graphiques, codés par le codage CEPT, les données reçues étant décodées dans un décodeur CEPT et introduites point par point dans la mémoire d'image complète du côté récepteur, et affichées sur un affichage.

8. Emetteur-récepteur de fac-similé selon l'une des revendications précédentes, en combinaison avec la reproduction d'originaux en couleur, caractérisé en ce que l'original est exploré point par point à l'aide d'une caméra d'images couleur (CCD) et que les valeurs de luminance (Y) et de différence de couleur (R-Y, B-Y) associées sont mémorisées sous la forme numérisée dans la mémoire d'image complète du dispositif d'exploration, et en ce que, d'après le procédé photographique du standard CEPT, les valeurs numériques sont codées dans un codeur et transmises par l'intermédiaire d'un modem.

9. Emetteur-récepteur de fac-similé selon l'une des revendications précédentes, caractérisé en ce que les couleurs élémentaires RGB d'un document image en couleur exploré, pris par une caméra vidéo, sont mesurées individuellement pour chaque point et introduites dans une, mémoire d'image complète, en ce qu'elles sont codées selon le standard CEPT et transmises par l'intermédiaire du modem, puis introduites après le décodage dans une mémoire d'images complètes sous la forme d'une information de représentation RGB point par point, et en ce que les signaux RGB décodés sont lus et affichés sur un affichage couleur.

10. Emetteur-récepteur de fac-similé selon l'une des revendications précédentes, caractérisé en ce que le codeur peut être commuté sur différentes vitesses de codage et ence qu'à chacune des vitesses de codage, est associée une information numérique qui est émise au début de la transmission au circuit récepteur par l'intermédiaire du modem, pour envoyer les données au décodeur, avec ou sans intervention d'une mémoire tampon, avec une vitesse adaptée à la vitesse d'émission, pour le décodage, ce décodeur décodant les données arrivant par l'intermédiaire du modem et les décodant à la vitesse de conversion ou, dans le cas de l'interposition d'une mémoire tampon, avec une autre vitesse, et mémorisant les signaux images, adressés par points dans la mémoire d'image complète, qui peut être lue dans le fonctionnement asynchrone avec l'exploration, la transmission et le décodage.

**Claims**

1. Fascimile transmitter-receiver with a scanning device for the generation of digital image signals which point by point correspond to an original to be copied, wherein the original is scanned line by line at a certain horizontal and vertical frequency, with a store for the storage of the digital image signals, with a coder for the coding of the digital image signals, with a modem for the data transmission and the data reception, with a decoding circuit, a store and a representation or recording equipment for received image signals, with a microcomputer for the control of the operation and with interfaces between the microcomputer on the one hand and the scanning equipment, the modem and the store as well as the representation display or the recording equipment on the other hand, characterised thereby, that for increasing the vertical image resolution at constant horizontal scanning frequency, the vertical scanning frequency is reducible in steps starting from a scanning standard in such a manner that the number of lines and the vertical scanning cycle are integral, that the point-related digital image signals are, under the control of the microcomputer, entered line by line at the horizontal scanning frequency into and intermediately stored in a frame store, that the image signals are read out, addressed point by point, at another frequency corresponding to the signal transmission speed and, provided with a line information and coded, transmitted by means of a downstream modem, that the signals received by way of a modem are decoded at the transmission speed and entered line by line in image-point-oriented manner into and stored in a frame store and that the image signals are, under the control of the microcomputer, read out from the frame store at an horizontal frequency which can differ from the scanning frequency and that the digital signals are fed to a display drive or a printer control.

2. Facsimile transmitter-receiver according to claim 1, characterised thereby, that a line counter, which counts the scanned lines of an original, is provided in the scanning equipment, that the microcomputer also files the number of lines in the frame store as a format instruction associated with the original and that the line format instruction and the digital image signals are coded in a coder and transmitted by way of the modem and that the signals at the receiver end are decoded and the lines are entered, addressed with reference to the format instruction, into a frame store and read out by a microcomputer and issued digitally by way of digital-to-analog converters and/or matrix circuits for representation on an image screen or to a buffer store of a printing unit and that even-numbered or odd-numbered lines are read out and represented in the case of reduced resolution in the representation plane.

3. Facsimile transmitter-receiver according to claim 1 or 2, characterised thereby, that the vertical frequency is reduced by a multiple by comparison with the standard frequency.

4. Facsimile transmitter-receiver according to one of the claims 1 to 3 and for the duplex operation, characterised thereby, that two frame stores, two modems, one coder and one decoder are provided.

5. Facsimile transmitter-receiver according to one of the preceding claims, characterised thereby, that the image data stored in the frame store of the scanning equipment are translated in the coder into coded signals according to the CEPT standard and transmitted by way of the modem.

6. Fascimile transmitter-receiver according to claim 5, characterised thereby, that the digital image signals in the frame store are analysed in terms of character place corresponding to the matrix according to CEPT standard (10 x 12 points) and, on agreement of the character content with mosaic elements in a ROM, issued by the microprocessor as associated coded information signals which are in turn translated in a CEPT decoder at the receiver end into corresponding point-oriented data, which image signals are entered into the frame store in the reproduction region.

7. Facsimile transmitter-receiver according to one of the preceding claims, characterised thereby, that the store content of the frame store is scanned by a microcomputer with regard to graphic elements, the operating programs of which are accommodated in a ROM of the microcomputer, and that this on given equivalence codes the graphic elements by CEPT coding and issues and transmits them, which received data are decoded in a CEPT decoder, filed point by point in the frame store of the receiver end and brought to indication on a display.

8. Facsimile transmitter-receiver according to one of the preceding claims in connection with the imaging of coloured picture originals, characterised thereby, that the original is scanned point by point by means of a colour picture camera (CCD) and the associated luminance values (Y) and colour difference values (R-Y) and (B-Y) are entered in digitalised form into the frame store of the scanning equipment and that the digital values are coded in a coder according to the photography method of the CEPT standard and transmitted by way of a modem.

9. Facsimile transmitter-receiver according to one of the preceding claims, characterised thereby, that the RGB colour components of a coloured picture original scanned and recorded by a video camera are determined individually for each point and filed in the frame store and that they are coded according to the CEPT standard and transmitted by way of the modem and entered after the decoding into a frame store as point-related information RGB signals and that the decoded RGB signals are read out and indicated on a colour display.

10. Facsimile transmitter-receiver according to one of the preceding claims, characterised thereby, that the coder is switchable to different coding speeds and that each coding speed is associated with a digital information signal which is delivered to the receiver circuit by way of the modem at the beginning of the transmission in order to conduct the data for decoding unbuffered or buffered to the decoder at a speed matched to the transmission speed, which decoder decodes the data arriving by way of the modem and decodes them at the translation speed or, in the case of the interposition of a buffer store, at another speed and enters the image signals addressed point by point into the frame store which is readable in asynchronous operation with the scanning, the transmission and the decoding.

Fig. 1

Fig. 2